# EUROPEAN PATENT SPECIFICATION

(11) **EP 2 295 835 B1**
(45) Date of publication and mention of the grant of the patent: **17.02.2016**
(21) Application number: 09794256.9
(22) Date of filing: 20.05.2009
(51) Int. Cl.: F16J 15/36, F16J 15/34

(54) **MECHANICAL SEAL DEVICE**
MECHANISCHE ABDICHTUNGSVORRICHTUNG
DISPOSITIF DE JOINT MÉCANIQUE

(30) Priority: 07.07.2008 JP 2008176853
(43) Date of publication of application: 16.03.2011
(73) Proprietor: Eagle Industry Co., Ltd., Minato-ku Tokyo 105-8587 (JP)
(72) Inventor: SUEFUJI, Yoshihiro, Tokyo 105-8587 (JP)
(74) Representative: Isarpatent
(86) International application number: PCT/JP2009/059281
(87) International publication number: WO 2010/004809

(56) References cited:
- GB-A- 634 989
- GB-A- 2 054 067
- JP-U- 2 146 271
- JP-U- 3 098 375
- JP-U- 4 066 463
- US-A- 2 094 160
- US-A- 2 100 220
- US-A- 2 574 808

## Description

### TECHNICAL FIELD

The present invention relates to a cartridge type mechanical seal device.

### BACKGROUND ART

A conventional mechanical seal device, as shown in the following Patent Article 1, includes a cartridge type in which a seal cover is joined with a first seal ring, arranged in the inner circumference side thereof, via an O-ring. In a mechanical seal device having such structure, the O-ring is eroded to cause a problem in durability when sealing a special fluid such as chemicals. Further, when the O-ring is eroded, it may be caused to leak the sealed fluid from the eroded joined surfaces.

Also, as shown in the following Patent Article 2, there may be included a mechanical seal device, in which a seal ring, metal bellows and coil spring are arranged within a stuffing box placed in the inner circumference side of a apparatus body. In a mechanical seal device having such structure, a special fluid such as chemicals can be sealed, but the mechanical seal device needs to be arranged within a stuffing box, so that it is required to specially design the stuffing box and a pump.

Also, for making the metal bellows have necessary spring constant, the number of peaks of the metal bellows has to be 8 or more in the rotary shaft direction, which causes a problem that the production cost is increased compared with a mechanical seal device having the structure as shown in the above Patent Article 1. On the other hand, if the number of peaks of the metal bellows is 8 or less, the spring constant of the metal bellows may be increased, causing to largely change seal pressing pressure due to a slight misalignment of the rotary shaft. This greatly influences seal capability, resulting in defects such as leakage.

[Patent Document 1] Japanese Unexamined Patent Publication No. 2003-74713
[Patent Document 2] Japanese Utility Model Publication No. 2556983 Document GB-A-2054067 discloses all the technical features set out in the preamble of claim 1.

### DISCLOSURE OF INVENTION

### PROBLEM TO BE SOLVED BY THE INVENTION

The present invention was made in view of the above problems, and the purpose is to provide a mechanical seal device, able to seal a special fluid such as chemicals, easy to be mounted to an apparatus and small in size.

### MEANS FOR SOLVING THE PROBLEM

To attain the above purpose, a mechanical seal device according to claim 1 is provided.

In the mechanical seal device according to the present invention, the spring is mounted to the seal cover along the axial direction in which the bellows is expanded and contracted. Such a structure allows ensuring pressing force to the first seal ring with pressing force of the spring. Therefore, the bellows can be arranged so that the bellows maintains an approximate free length after being mounted within the mechanical seal device. Consequently, it is possible to make the size in the axial direction smaller than that of a conventional bellows (i.e. it is possible to decrease the number of peaks of the bellows), so that the production cost of the bellows can be reduced and the mechanical seal device can also be downsized.

In the present invention, the bellows is metallic. Because of such a constitution, it is possible to prevent the bellows from eroding to special fluid such as chemicals. The metal forming the bellows is not particularly limited, and materials including alloy, such as stainless, inconel, hastelloy and carpenter, and titanium may be used to produce the bellows.

In the present invention, the spring is preferably arranged in an outer circumference side of the bellows. Also preferably, the first seal ring, the second seal ring, the spring and the bellows are integrally assembled in a form of a cartridge within an inner circumference side of the seal cover. Such constitution allows the mechanical seal device to be easily mounted in the apparatus body without any special design change in the apparatus body. Also, since the mechanical seal device is integrally assembled in the form of a cartridge, the first seal ring and the second seal ring can accurately be assembled.

### EFFECTS OF THE INVENTION

According to the present invention, it is possible to provide a mechanical seal device, able to seal special fluid such as chemicals, easy to be mounted into a apparatus and downsized.

### BRIEF EXPLANATION OF THE DRAWINGS

FIG. 1 is a sectional view of a key part showing a mechanical seal device according to an embodiment of the present invention mounted in a rotary shaft.
FIG.2 is a plane view of the seal cover in the mechanical seal device shown in FIG. 1.
FIG.3 is a magnified view of a key part showing a relation between the bellows and sliding surface shown in FIG. 1.

### BEST MODE FOR WORKING THE INVENTION

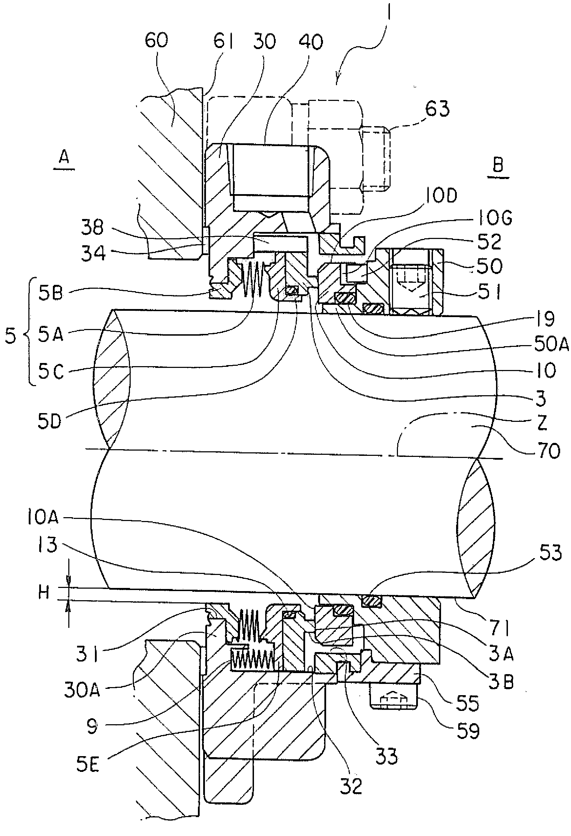

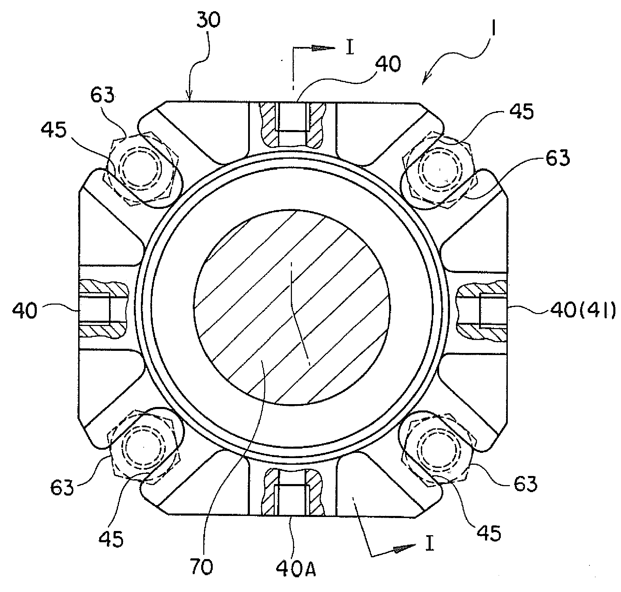

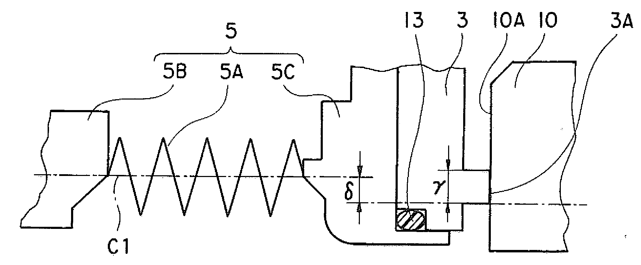

Hereinafter, the present invention will be explained based on the embodiment shown in the drawings. FIG. 1 is a sectional view of a key part showing a mechanical seal device according to one embodiment of the present invention mounted in a rotary shaft; FIG. 2 is a plane view of the seal cover in the mechanical seal device shown in FIG. 1; and FIG. 3 is a magnified view of a key part showing a relation between the bellows and the sliding surface shown in FIG. 1.

As shown in FIG. 1, a mechanical seal device 1 according to an embodiment of the present invention is loaded as a cartridge in the outer circumference surface 71 of a rotary shaft 70 in the outer surface of a apparatus body 60 for sealing the inside A of the apparatus body 60 (e.g. casing of a centrifugal pump) with respect to the air B.

The mechanical seal device 1 comprises a seal cover 30, mounted to the outer surface 61 of the apparatus body 60, and a sleeve collar 50, matingly engaged into the rotary shaft 70 by a set screw 51.

The seal cover 30 mounted to the apparatus body 60 is, as shown in FIG. 2, formed with its external form of an approximately rectangular shape from a perpendicular direction to the rotary shaft 70. The seal cover 30 is provided with fixing grooves 45 at four corners along the circumferential direction. Bolts 63 are fitted into these fixing grooves 45, so that the seal cover 30 is mounted to the apparatus body 60.

As shown in FIG. 1, a first seal ring 3, a second seal ring 10, a spring 9 and a bellows 5 are arranged in the inner circumference side of the seal cover 30. The bellows 5 comprises a main bellows body 5A and bellows end holding portions 5B and 5C.

The sleeve collar 50 is fixed in the rotary shaft 70 with the set screw 51, so as to rotate with the rotary shaft 70. An O-ring 53 is mounted between the sleeve collar 50 and the rotary shaft 70, and the O-ring 53 seals the sleeve collar 50 to the rotary shaft 70.

The sleeve collar 50 is formed with a projection portion 50A, which extends toward the inside A of the apparatus along the axial direction Z of the rotary shaft 70, and the second seal ring 10 is mounted to the outer circumference surface of the projection portion 50A via an O-ring 19 which seals the projection portion 50A to the second seal ring 10.

The second seal ring 10 is formed with a concave portion 10G in the side surface near the air B. A knock pin 52 is fitted in between the concave portion 10G and the sleeve collar 50 to prevent the second seal ring 10 from freely rotating, so that the second seal ring 10 rotates with the rotary shaft 70.

The second seal ring 10 is formed with a sliding surface 10A in the side surface near the inside A of the apparatus. The sliding surface 10A is sealingly contacted with a sliding surface 3A of the first seal ring 3 to rotate and slide. The second seal ring 10 is made of materials including superhard material such as SiC (silicon carbide) and WC (tungsten carbide), carbon and other ceramics, etc.

A projection portion 30A is formed in the inner circumference of the seal cover 30, projecting inwardly in radial direction. The inner circumference surface of the projection portion 30A and the side surface of the projection portion 30A in the side of the air B form a fitting surface 31. Also, in addition to the fitting surface 31, a cooling annular groove 32 and a squeezing surface 33 are formed in the inner circumference of the seal cover 30.

The bellows end holding portion 5B is fitted with the fitting surface 31 to be fixed thereto. The bellows end holding portion 5C, i.e. the other end portion of the bellows 5, is formed with a projection portion 5D extending toward the air B along the axial direction Z of the rotary shaft 70. The first seal ring 3 is mounted to the outer circumference surface of the projection portion 5D via an O-ring 13, and the O-ring 13 seals the projection portion 5D to the first seal ring 3.

The first seal ring 3 is formed with a projection portion 3B extending toward the air B along the axial direction Z of the rotary shaft 70. The projection portion 3B is sealingly contacted with the facing sliding surface 10A of the second seal ring 10 and slides. The first seal ring 3 is made of materials including superhard material such as SiC (silicon carbide) and WC (tungsten carbide), carbon and other ceramics, etc.

The bellows end holding portion 5C is formed with a projection portion 5E extending outwardly in its radial direction, and the projection portion 5E and the first seal ring 3 are prevented from rotating by a knock pin 38 to the side surface of the seal cover of the cooling annular groove 32 in the side of the inside A of the apparatus. Also, the spring 9 is arranged between the projection portion 5E and the side surface of the seal cover of the cooling annular groove 32 in the side of the inside A of the apparatus, and the projection portion 5E is pressed by the spring 9 in axial direction Z of the rotary shaft 70, so that the first seal ring 3 is pressed via the projection portion 5E to axial direction Z of the rotary shaft 70. This allows the sliding surface 3A of the first seal ring 3 (projection portion 3B) to be sealingly contacted with the facing sliding surface 10A of the second seal ring 10 to slide.

A plurality of the springs 9 are arranged in the outer side of the bellows 5 in radial direction and in the inner circumference of the seal cover 30 (side surface of the seal cover of the cooling annular groove 32 in the side of the inside A of the apparatus) in circumferential direction. The number of the springs 9 is not particularly limited and may be 4 to 24.

The main bellows body 5A is expandably mounted between the bellows end holding portion 5B and 5C, along axial direction Z of the rotary shaft 70. The metal forming the bellows 5 is made of materials including alloy, such as stainless, inconel, hastelloy and carpenter, and titanium.

The O-rings 13, 19 and 53 are produced by materials such as fluorine-containing rubber, nitrile rubber, EPDM, perfluoroelastomer. Also, when corrosion resistance is required in the O-ring, perfluoroelastomer, preferably Kalrez ®, is used to produce it.

The squeezing surface 33 is adjacently fitted into the outer circumference surface 10D of the second seal ring 10, and constitutes a squeezing seal function portion for fluid introduced from the quenching route 40.

As shown in FIG. 2, the seal cover 30 is provided with 1 to 3 quenching routes 40, a drain hole 40A and if necessary a flushing passage 41 along the outer circumference surface at equal intervals. The quenching route 40 is formed so as to linearly communicate within the cooling annular groove 32 from a pipe screw portion connectable to outer pipe. Since quenching liquid is introduced directly from the quenching route 40 into the sliding surface 3A of the first seal ring 3 and the sliding surface 10A of the second seal ring 10, heat generation due to sliding of both sliding surfaces 3A and 10A can be cooled. The quenching liquid introduced from the quenching route 40 is discharged from the drain hole 40A.

As shown in FIG. 1, a gap H is formed between the bellows 5 and the outer circumference surface 71 of the rotary shaft 70. The size of the gap H is calculated to flow without solidifying the sealed fluid to clog. Also, a gasket 34 is provided between the seal cover 30 and the apparatus body 60. The gasket 34 is made of resin, metal, etc.

The seal cover 30 and the sleeve collar 50 are positioned by a set plate 55 arranged in the outer circumference surface of the sleeve collar 50, and mounted to the apparatus body 60. The set plate 55 is fixed to the outer circumference surface of the sleeve collar 50 with a socket bolt 59.

In thus-constituted mechanical seal device 1 in the present embodiment, the spring 9 is mounted to the inner circumference side of the seal cover 30 along the axial direction Z of the rotary shaft 70 in which the bellows 5 is expanded and contracted. Because of sufficient pressing force of the spring 9 via the bellows end holding portion 5C against the first seal ring 3, the bellows 5 needs almost no pressing force to the first seal ring 3. Therefore, it is possible to mount the main bellows body 5A so that the bellows maintains an approximate free length after being mounted. In other word, the number of peaks of the main bellows body 5A can be decreased, so that production cost of the bellows 5 can be reduced. Also, the mechanical seal device 1 can be downsized. The number of peaks of the main bellows body 5A may be 3 to 5, preferably 4. Also, the length of the mechanical seal device 1 in axial direction Z along the rotary shaft 70 can be 50 mm or less.

Also, since erosion of bellows 5 due to special fluid such as chemicals can be prevented by making the bellows 5 with metal, the sealed fluid in the inside A of the apparatus can be prevented from leaking.

Also, because of the structure where the spring 9 is arranged in the outer circumference side of the bellows 5, and where the first seal ring 3, the second seal ring 10, the spring 9 and the bellows 5 are integrally combined as a cartridge in the inner circumference side of the seal cover 30, the mechanical seal device 1 can easily be mounted to the apparatus body 60 without any special design change in the apparatus body 60. Further, the first seal ring 3 and the second seal ring 10 can also be accurately assembled before mounting these to the apparatus body 60.

The mechanical seal device 1 ensures the pressing force to both of the sliding surfaces 3A and 10A by the spring 9, so that it is possible to control the pressing force with the width γ of the sliding surface 3A in the radial direction as shown in FIG. 3. The width γ of the sliding surface 3A in the radial direction is preferably 1 to 4 mm, particularly preferably 2.5 mm or less.

Also, the pressing force to the sliding surfaces 3A and 10A is defined by the pressing force of the sealed fluid in the width δ of the radial direction between a joint portion of the main bellows body 5A with the bellows end holding portion 5C, and the inner circumference surface of the projection portion 3B, in addition to the pressing force by the spring 9. A center C1 of the bellows 5 in the radial direction is preferably within the range of the width γ of the sliding surface 3A in the radial direction.

Because of this constitution, the bellows 5 can more preferably be arranged within the mechanical seal device 1 so that the bellows 5 maintains an approximate free length after being mounted. Also, since several kinds of cartridge type mechanical seal device 1 can preliminarily be prepared depending on the shaft diameter in the present embodiment, the present invention is applicable in any shaft diameter. Also, the pressure of the inside A of the apparatus where the sealed fluid is stored is 2.0 MPa or less, preferably 1.5 MPa or less.

In the mechanical seal device 1 of the present embodiment, the first seal ring 3 and the second seal ring 10 are respectively formed, as mentioned before, by combining superhard material such as SiC (silicon carbide) and WC (tungsten carbide), carbon and other ceramics. Consequently, even when the first seal ring 3 is impeled toward the direction of the second seal ring 10 by the pressing force of the spring 9 to cause to sealingly contact the sliding surface 3A of the first seal ring 3 with the sliding surface 10A of the second seal ring 10, the shape of the sliding surface 3A of the first seal ring 3 is not substantially changed.

Note that the present invention is not limited to the above-mentioned embodiment, and can be variously modified within the range of the present invention. For example, in the above-mentioned embodiment, the first seal ring and the second seal ring are formed by materials including superhard material such as SiC (silicon carbide) and WC (tungsten carbide), carbon and other ceramics, but any other material may be used if it is high in hardness. Also, the external form of the seal cover may be circular.

### EXPLANATION OF SYMBOLS

- 1: mechanical seal device
- 3: first seal ring
- 3A: sliding surface
- 3B: projection portion
- 5: bellows
- 9: spring
- 10: second seal ring
- 10A: sliding surface
- 13: O-ring
- 19: O-ring
- 30: seal cover
- 30A: projection portion
- 32: cooling annular groove
- 38: knock pin
- 40: quenching route
- 40A: drain hole
- 41: flushing passage
- 50: sleeve collar
- 51: set screw
- 52: knock pin
- 53: O-ring
- 59: socket bolt
- 60: apparatus body
- 70: rotary shaft

- A: inside
- B: air
- H: gap

## Claims

1. A mechanical seal device comprising
a seal cover (30) mounted to an axial outer surface of a apparatus body having an inner circumference into which a rotary shaft (70) is inserted,
a first seal ring (3) axially-movably arranged in an inner circumference side of said seal cover (30),
a second seal ring (10) fixed to said rotary shaft (70),
a spring (9) arranged in the inner circumference side of said seal cover (30), pressing said first seal ring (3) in a direction toward said second seal ring (10),
a bellows (5) mounted to the inner circumference side of said seal cover (30) and axially-expandably mounted between said seal cover (30) and said first seal ring (3), wherein:
said spring (9) is mounted to said seal cover (30) along the axial direction in which said bellows (5) is expanded and contracted;
said bellows (5) comprises a metallic main bellows body (5A) and a pair of metallic bellows end holding portions (5B, 5C) joined respectively with both axial ends of the main bellows body (5A);
one of said bellows end holding portions (5C) connected to said first seal ring (3) is formed with a projection portion (5E) extending outwardly in a radial direction;
said spring (9) presses said first seal ring (3) via said projection portion (5E) to a direction of said second seal ring (10); **characterized in that**
a gap (H) is formed between the bellows (5) and the outer circumference surface (71) of the rotary shaft (70), and the size of the gap (H) is calculated to allow flow without solidifying the seal fluid to clog,
a center (C1) of the bellows (5) in the radial direction is within the range of the width (γ) of a sliding surface (3A) in the radial direction, the sliding surface (3A) corresponding to the first sealing ring (3) and being sealingly contacted with a sliding surface (10A)
corresponding to the second sealing ring (10), and the pressing force to the sliding surfaces (3A, 10A) is defined by not only the pressing force of the spring (9), but also the pressing force of the sealed fluid in the width (δ) of the radial direction between a joint portion of the main bellows body (5A)with the bellows end holding portion (5C) in the radial direction and an inner circumference surface of a projection portion (3B) corresponding to the first sealing ring (3) and the sliding surface (3A),
said bellows is mounted so that said bellows maintains an approximate free length after being mounted; and
number of peaks of said main bellows body is 3 to 5.

2. The mechanical seal device as set forth in claim 1 , wherein said spring (9) is arranged in an outer circumference side of said bellows (5).

3. The mechanical seal device as set forth in any one of claims 1 to 2, wherein said first seal ring (3), said second seal ring (10), said spring (9) and said bellows (5) are integrally assembled in a form of a cartridge within an inner circumference side of said seal cover.

## Patentansprüche

1. Mechanische Dichtungsvorrichtung, die Folgendes umfasst:
eine Dichtungsabdeckung (30), die an einer axialen Außenfläche eines Vorrichtungskörpers montiert ist, der einen Innenumfang aufweist, in den eine Drehwelle (70) eingesetzt ist,
einen ersten Dichtungsring (3), der axial beweglich auf einer Innenumfangsseite der Dichtungsabdeckung (30) angeordnet ist,
einen zweiten Dichtungsring (10), der an der Drehwelle (70) befestigt ist,
eine Feder (9), die auf der Innenumfangsseite der Dichtungsabdeckung (30) angeordnet ist und den ersten Dichtungsring (3) in Richtung des zweiten Dichtungsrings (10) drückt,
einen Balg (5), der an der Innenumfangsseite der Dichtungsabdeckung (30) montiert ist und axial ausdehnbar zwischen der Dichtungsabdeckung (30) und dem ersten Dichtungsring (3) montiert ist, wobei:
die Feder (9) an der Dichtungsabdeckung (30) entlang der axialen Richtung montiert ist, in welcher der Balg (5) sich ausdehnt und zusammenzieht;
der Balg (5) einen metallischen Hauptbalgkörper (5A) und ein Paar metallischer Balg-Enden-Halteabschnitte (5B, 5C) umfasst, die jeweils mit beiden axialen Enden des Hauptbalgkörpers (5A) verbunden sind;
einer der Balg-Enden-Halteabschnitte (5C), der mit dem ersten Dichtungsring (3) verbunden ist, mit einem Vorsprungsabschnitt (5E) ausgebildet ist, der sich in einer radialen Richtung auswärts erstreckt;
die Feder (9) den ersten Dichtungsring (3) mittels des Vorsprungsabschnitts (5E) in eine Richtung des zweiten Dichtungsrings (10) drückt; **dadurch gekennzeichnet, dass** ein Spalt (H) zwischen dem Balg (5) und der Außenumfangsfläche (71) der Drehwelle (70) gebildet wird, und die Größe des Spalts (H) so berechnet ist, dass ein Fließen ermöglicht wird, ohne dass sich das Dichtungsfluid bis zum Verstopfungspunkt verfestigt,
eine Mitte (C1) des Balges (5) in der radialen Richtung innerhalb des Bereichs der Breite (γ) einer Gleitfläche (3A) in der radialen Richtung liegt, wobei die Gleitfläche (3A) dem ersten Dichtungsring (3) entspricht und in abdichtender Weise mit einer Gleitfläche (10A) in Kontakt steht, die dem zweiten Dichtungsring (10) entspricht, und die Anpresskraft an den Gleitflächen (3A, 10A) nicht nur durch die Anpresskraft der Feder (9) definiert wird, sondern auch durch die Anpresskraft des abgedichteten Fluids in der Breite (δ) der radialen Richtung zwischen einem Verbindungsabschnitt des Hauptbalgkörpers (5A) mit dem Balg-Enden-Halteabschnitt (5C) in der radialen Richtung und einer Innenumfangsfläche eines Vorsprungsabschnitts (3B), die dem ersten Dichtungsring (3) und der Gleitfläche (3A) entspricht,
wobei der Balg so montiert ist, dass der Balg eine ungefähre freie Länge beibehält, nachdem er montiert wurde; und
die Anzahl der Spitzen des Hauptbalgkörpers 3 bis 5 beträgt.

2. Mechanische Dichtungsvorrichtung nach Anspruch 1, wobei die Feder (9) auf einer Außenumfangsseite des Balges (5) angeordnet ist.

3. Mechanische Dichtungsvorrichtung nach einem der Ansprüche 1 und 2, wobei der erste Dichtungsring (3), der zweite Dichtungsring (10), die Feder (9) und der Balg (5) einstückig in Form einer Kartusche innerhalb einer Innenumfangsseite der Dichtungsabdeckung zusammengesetzt sind.

## Revendications

1. Dispositif formant joint mécanique comprenant :
un couvercle d'étanchéité (30) monté sur une surface extérieure axiale d'un corps d'appareil présentant une circonférence intérieure dans laquelle est inséré un arbre rotatif (70),
une première bague d'étanchéité (3) disposée de manière à être mobile axialement, sur un côté de circonférence intérieure dudit couvercle d'étanchéité (30),
une seconde bague d'étanchéité (10) fixée audit arbre rotatif (70),
un ressort (9) disposé sur le côté de circonférence intérieure dudit couvercle d'étanchéité (30), en exerçant une pression sur ladite première bague d'étanchéité (3) en direction de ladite seconde bague d'étanchéité (10),
un soufflet (5) monté sur le côté de circonférence intérieure dudit couvercle d'étanchéité (30) et monté de manière à pouvoir se détendre axialement, entre ledit couvercle d'étanchéité (30) et ladite première bague d'étanchéité (3), dans lequel :
ledit ressort (9) est monté sur ledit couvercle d'étanchéité (30), le long de la direction axiale dans laquelle ledit soufflet (5) se détend et se contracte ;
ledit soufflet (5) comprend un corps principal métallique de soufflet (5A) et une paire de parties métalliques de maintien d'extrémités de soufflet (5B, 5B) respectivement jointes aux deux extrémités axiales du corps principal de soufflet (5A) ;
l'une desdites parties de maintien d'extrémités de soufflet (5C) reliée à ladite première bague d'étanchéité (3) est formée avec une partie en saillie (5E) s'étendant vers l'extérieur dans une direction radiale ;
ledit ressort (9) exerce une pression sur ladite première bague d'étanchéité (3) par l'intermédiaire de ladite partie en saillie (5E) en direction de ladite seconde bague d'étanchéité (10) ; **caractérisé en ce que** :
un espace (H) est formé entre le soufflet (5) et la surface de circonférence extérieure (71) de l'arbre rotatif (70), et la taille de l'espace (H) est calculée pour permettre un écoulement du fluide confiné hermétiquement sans solidification de celui-ci donnant lieu à un engorgement,
un centre (C1) du soufflet (5) dans la direction radiale se situe dans les limites de la largeur (γ) d'une surface de glissement (3A) dans la direction radiale, la surface de glissement (3A) correspondant à la première bague d'étanchéité (3) et étant mise en contact étanche avec une surface de glissement (10A) correspondant à la seconde bague d'étanchéité (10), et la force pressante exercée sur les surfaces de glissement (3A, 10A) est définie non seulement par la force pressante du ressort (9), mais aussi par la force pressante du fluide confiné hermétiquement, dans la largeur (δ) de la direction radiale entre une partie de jonction du corps principal de soufflet (5A) avec la partie de maintien d'extrémité de soufflet (5C) dans la direction radiale et
une surface de circonférence intérieure d'une partie en saillie (3B) correspondant à la première bague d'étanchéité (3) et la surface de glissement (3A),
ledit soufflet est monté de manière que ledit soufflet conserve une longueur sensiblement libre après avoir été monté ; et
le nombre de crêtes dudit corps principal de soufflet est de 3 à 5.

2. Dispositif formant joint mécanique selon la revendication 1, dans lequel ledit ressort (9) est disposé sur un côté de circonférence extérieure dudit soufflet (5).

3. Dispositif formant joint mécanique selon l'une quelconque des revendications 1 et 2, dans lequel ladite première bague d'étanchéité (3), ladite seconde bague d'étanchéité (10), ledit ressort (9) et ledit soufflet (5) sont assemblés en une seule pièce, sous la forme d'une cartouche à l'intérieur d'un côté de circonférence intérieure dudit couvercle d'étanchéité.
